# EUROPEAN PATENT APPLICATION

(11) **EP 3 205 513 A1**
(43) Date of publication of application: **16.08.2017**
(21) Application number: 15849780.0
(22) Date of filing: 09.10.2015
(51) Int. Cl.: B60B 35/02, B60B 27/02, F16C 19/18, F16C 27/06, F16F 15/04

(54) **WHEEL BEARING DEVICE**

(30) Priority: 10.10.2014 JP 2014208888
(71) Applicant: NTN Corporation, Osaka-shi, Osaka 550-0003 (JP)
(72) Inventor: KAWAMURA, Hiroshi, Iwata-shi Shizuoka 438-8510 (JP); MORITA, Shunsuke, Iwata-shi Shizuoka 438-8510 (JP)
(74) Representative: Cohausz & Florack
(86) International application number: PCT/JP2015/078737
(87) International publication number: WO 2016/056646

(57) **Abstract**

One object of the present invention is to provide a wheel bearing apparatus which can perform both keep of the rigidity of the wheel bearing apparatus and reduction of the vibration transmitted to a cabin of a vehicle. According to the present invention, there is provided a wheel bearing apparatus comprising an outer member integrally formed on its outer circumference with a body mounting flange to be mounted on a knuckle forming part of a suspension apparatus and also integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the inner member being formed on its outer circumference with double row inner raceway surfaces opposing to the double row outer raceway surfaces; double row rolling elements contained between the double row inner raceway surfaces and the double row outer raceway surfaces respectively of the inner member and the outer member; and the outer member being adapted to be fastened to the knuckle through securing bolts characterized in that a vibration damping member is interposed between opposite surfaces of the body mounting flange of the outer member and of the knuckle.

## Description

### Field of the invention

The present invention generally relates to a wheel bearing apparatus for rotationally support a wheel of a vehicle such as an automobile, and more particularly to a wheel bearing apparatus provided with a vibration damping member in a vibration transmitting path.

### Description of Background Art

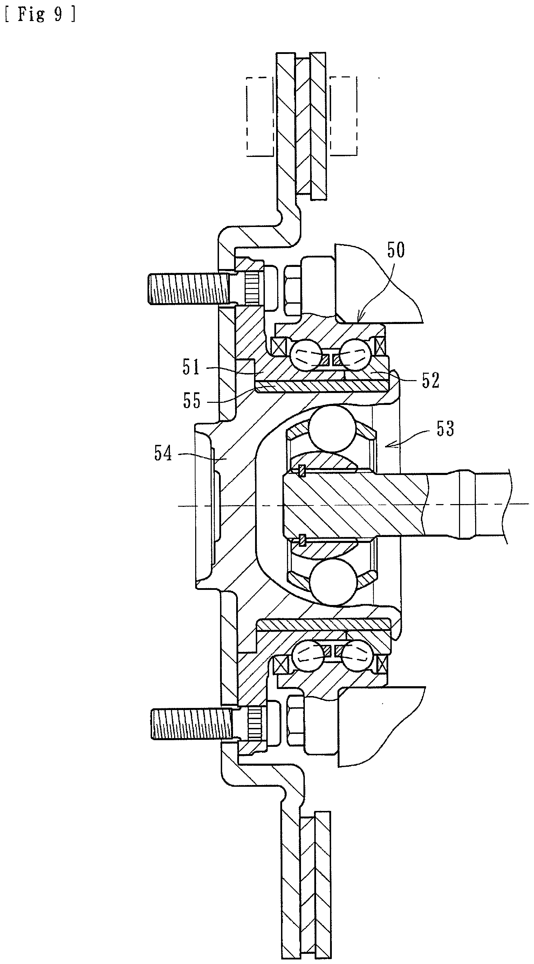

In order to improve the riding comfort or reduce the cabin noise, a structure for providing a vibration damping mechanism in a wheel bearing apparatus for mounting a tire wheel or brake disc has been proposed, e.g. a structure in which a cylindrical vibration damping member is arranged between a hub wheel for mounting a wheel and an inner ring. In one example shown in Fig. 9, an elastic member 55 is interposed between inner rings 51, 52 of a double row rolling bearing 50 and an outer joint member 54 of a constant velocity universal joint 53 in order to suppress transmission of vibration to the double row rolling bearing 50 with damping the vibration of the constant velocity universal joint 53 by the elastic member 55 and to improve the bearing life with suppressing the fretting wear of the bearing from the vibration. Such vibration damping members i.e. elastic member 55 comprises polymer materials such as thermoplastic, elastomer etc. or a vibration damping steel plate in which polymer material is sandwiched by normal steel plate (see e.g. Patent Document 1 below).

### Document of Prior Art

### Patent Document

Patent Document 1: JP 2001-246903 A

### Disclosure of the invention

### Problems to be solved by the invention

However, there is a problem in the vibration damping material of polymer material such as rubber of the prior art that although it exhibits high vibration absorbing effect relative to a high frequency range above several thousand Hz, it cannot exhibit sufficient damping effect relative to resonation noise (road noise) of 200∼300 Hz caused by vibration of a rubber tire running on an uneven road when applying to the wheel hub of the vehicle. Another problem of the prior art is that the vibration damping member is lacking in durability when high eccentric loads are repeatedly or long term applied onto the hub wheel and thus tends to be caused permanent strains by the eccentric loads.

It is, therefore, an object of the present invention to provide a wheel bearing apparatus which can perform both keeping of the rigidity of the wheel bearing apparatus and reduction of the vibration transmitted to a cabin of a vehicle and suppressing road noise.

### Means for solving problems

For achieving the object mentioned above, there is provided, according to the present invention of claim 1, a wheel bearing apparatus comprising an outer member integrally formed on its outer circumference with a body mounting flange to be mounted on a knuckle forming part of a suspension apparatus and also integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the inner member being formed on its outer circumference with double row inner raceway surfaces opposing to the double row outer raceway surfaces; double row rolling elements rollably contained between the double row inner raceway surfaces and the double row outer raceway surfaces respectively of the inner member and the outer member; and the outer member being adapted to be fastened to the knuckle through securing bolts characterized in that a vibration damping member is interposed between opposite surfaces of the body mounting flange of the outer member and of the knuckle.

According to the wheel bearing apparatus of claim 1 of the present invention, since it comprises an outer member integrally formed on its outer circumference with a body mounting flange to be mounted on a knuckle forming part of a suspension apparatus and also integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the inner member being formed on its outer circumference with double row inner raceway surfaces opposing to the double row outer raceway surfaces; double row rolling elements contained between the double row inner raceway surfaces and the double row outer raceway surfaces respectively of the inner member and the outer member; and the outer member being adapted to be fastened to the knuckle through securing bolts and is characterized in that a vibration damping member is interposed between opposite surfaces of the body mounting flange of the outer member and of the knuckle, it is possible to provide a wheel bearing apparatus which can perform both keeping of the rigidity of the wheel bearing apparatus and reduction of the vibration transmitted to a cabin of a vehicle with suppressing road noise generated between a road surface and a wheel transmitted to the knuckle via a bearing portion.

It is preferable as defined in claim 2 of the present invention that the vibration damping member is formed of vibration damping alloy or vibration damping resin. This makes it possible to exhibit the vibration damping effect and thus to suppress the transmission of road noise to the knuckle.

It is preferable as defined in claim 3 of the present invention that the vibration damping member comprises a circular disc portion adapted to be contacted with an inner-side side surface of the body mounting flange and a cylindrical portion axially extending from a radially inner end of the circular disc portion and adapted to be inserted onto a cylindrical pilot portion of the outer member, and through apertures are formed in the circular disc portion through which the securing bolts are passed. This makes it possible to suppress the deformation amount of the vibration damping member with reducing the surface pressure applied to the vibration damping member and thus to improve the rigidity of the suspension of a vehicle.

It is also preferable as defined in claim 4 of the present invention that the cylindrical portion of the vibration damping member is press-fitted onto the pilot portion of the outer member or into the knuckle. This enables to simplify the assembling work of the wheel bearing apparatus to the knuckle and thus reduce the manufacturing cost.

It is preferable as defined in claim 5 of the present invention that a brake drum or brake disc is secured on the wheel mounting flange and a splash guard for closing an opening of the brake drum or brake disc is formed by the vibration damping member. This makes it possible not only to reduce vibration transmitted to a cabin with suppressing transmission of road noise to the knuckle but also to perform same assembling process or steps as current process or steps without changing the assembling line.

It is preferable as defined in claim 6 of the present invention that female threads for screwing the securing bolts are formed in the body mounting flange of the outer member, the through apertures for the securing bolts are formed in the knuckle, recesses for receiving the vibration damping members are formed around inner-side openings of the female threads or around outer-side openings of the through apertures of the knuckle, and the axial thickness of the vibration damping members is larger than the depth of the recesses. This makes it possible not only to reduce vibration transmitted to a cabin with suppressing transmission of road noise to the knuckle but also to increase close contact property of the vibration damping member to the body mounting flange and the knuckle due to fastening of the securing bolts to achieve rigid fixation.

It is also preferable as defined in claim 7 of the present invention that through apertures are formed in the body mounting flange and the knuckle, vibration damping members are inserted into either one of these through apertures, each the vibration damping member comprises a cylindrical portion being inserted into the through apertures and a flange portion extending radially outward from one end of the cylindrical portion and adapted to be closely contacted with a side surface of the body mounting flange or the knuckle, each the cylindrical portion of the vibration damping member is formed with a female thread which is screwed with a male thread of the securing bolt under a condition in which the end face of the cylindrical portion is abutted against the body mounting flange or the knuckle. This makes it possible to suppress transmission of road noise to the knuckle via the securing bolts and thus reduce vibration transmitted to a cabin.

### Effects of the invention

According to the wheel bearing apparatus of the present invention, since it comprises an outer member integrally formed on its outer circumference with a body mounting flange to be mounted on a knuckle forming part of a suspension apparatus and also integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the inner member being formed on its outer circumference with double row inner raceway surfaces opposing to the double row outer raceway surfaces; double row rolling elements contained between the double row inner raceway surfaces and the double row outer raceway surfaces respectively of the inner member and the outer member; and the outer member being adapted to be fastened to the knuckle through securing bolts and is characterized in that a vibration damping member is interposed between opposite surfaces of the body mounting flange of the outer member and of the knuckle, it is possible to provide a wheel bearing apparatus which can perform both keep of the rigidity of the wheel bearing apparatus and reduction of the vibration transmitted to a cabin of a vehicle with suppressing road noise generated between a road surface and a wheel being transmitted to the knuckle via a bearing portion.

### Brief Description of the Drawings

[Fig.1] A longitudinal section view of one embodiment of a wheel bearing apparatus of the present invention;
[Fig. 2] A longitudinal section view showing one modification of the vibration damping member of Fig. 1;
[Fig. 3] A partially enlarged view showing another modification of the vibration damping member of Fig. 1;
[Fig. 4] A longitudinal section view showing the other modification of the vibration damping member of Fig. 1;
[Fig. 5] A partially enlarged view showing the other modification of the vibration damping member of Fig. 1;
[Fig. 6] A partially enlarged view showing the other modification of the vibration damping member of Fig. 1;
[Fig. 7] A partially enlarged view showing the other modification of the vibration damping member of Fig. 1;
[Fig. 8] A partially enlarged view showing the other modification of the vibration damping member of Fig. 1; and
[Fig. 9] A longitudinal section view of a wheel bearing apparatus of the prior art. Preferable mode for carrying out the invention

A preferable mode for carrying out the present invention is a wheel bearing apparatus comprising an outer member integrally formed on its outer circumference with a body mounting flange to be mounted on a knuckle forming part of a suspension apparatus and also integrally formed on its inner circumference with double row outer raceway surfaces; an inner member including a hub wheel and at least one inner ring, the hub wheel being integrally formed on its one end with a wheel mounting flange and having a cylindrical portion axially extending from the wheel mounting flange, the inner ring being press fitted onto the cylindrical portion of the hub wheel, the inner member being formed on its outer circumference with double row inner raceway surfaces opposing to the double row outer raceway surfaces; double row rolling elements contained between the double row inner raceway surfaces and the double row outer raceway surfaces respectively of the inner member and the outer member; and the outer member being adapted to be fastened to the knuckle through securing bolts characterized in that a vibration damping member is interposed between opposite surfaces of the body mounting flange of the outer member and of the knuckle and that the vibration damping member comprises a circular disc portion adapted to be contacted with an inner-side side surface of the body mounting flange and a cylindrical portion axially extending from a radially inner end of the circular disc portion and adapted to be inserted onto a cylindrical pilot portion of the outer member, and through apertures are formed in the circular disc portion through which the securing bolts are passed.

### Embodiment

A preferred embodiment of the present invention will be described with reference to the accompanied drawings.

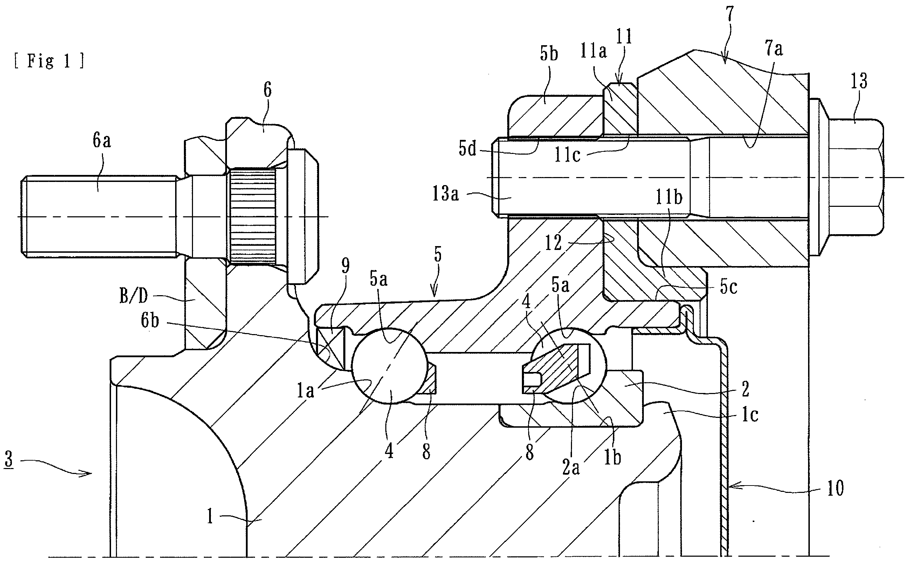

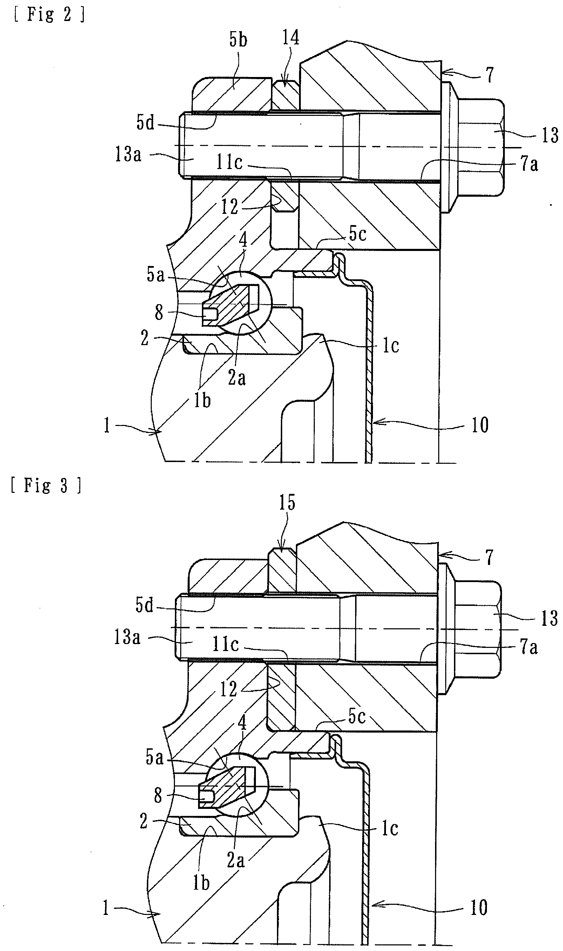

Fig.1 is a longitudinal section view of one embodiment of a wheel bearing apparatus of the present invention, Fig. 2 is a partially enlarged view showing one modification of the vibration damping member of Fig. 1, and Figs. 3∼8 are partially enlarged views or a longitudinal section view showing the other modification of the vibration damping member of Fig.1. In description of this specification, an outer-side of a vehicle when the wheel bearing apparatus is mounted on a vehicle is referred to as "outer-side" (a left-side in Fig. 1) and an inner-side of the vehicle is referred to as "inner side" (a right-side in Fig. 1).

The wheel bearing apparatus shown in Fig. 1 is a so-called "third generation" type for a driven wheel and comprises an inner member 3 including a hub wheel 1 and an inner ring 2 press-fitted onto the hub wheel 1, and an outer member 5 inserted on the inner member 3 via double row rolling elements (balls) 4,4.

The hub wheel 1 is integrally formed, on its outer-side end, with a wheel mounting flange 6 for mounting a wheel (not shown) via a brake drum (or brake disc) B/D and is formed, on its outer circumference, with one (outer-side) inner raceway surface 1a from which axially extends a cylindrical portion 1b. Hub bolts 6a for securing on the wheel mounting flange 6 are implanted on its circumferentially equidistant positions.

On the other hand, the inner ring 2 is formed, on its outer circumference, with other (inner-side) inner raceway surface 2a and press-fitted onto the cylindrical portion 1b of the hub wheel 1 via a predetermined interference. In addition, the inner ring 2 is axially secured on the hub wheel 1 with being applied a predetermined bearing pre-pressure by a caulked portion 1c formed by plastically deforming the end of the cylindrical portion 1b of the hub wheel 1 radially outward.

The hub wheel 1 is made of medium-high carbon steel such as S53C including carbon of 0.40∼0.80% by weight and is hardened by high frequency induction hardening as having a surface hardness of 50∼64 HRC over the inner raceway surface 1a and a region from an inner-side base 6b of the wheel mounting flange 6 which is a seal land portion of seal 9 to the cylindrical portion 1b. The caulked portion 1c is not hardened to keep hardness after forging. This enables not only to improve the wear resistance of the base 6b of the wheel mounting flange 6 but also to perform plastic machining of the caulked portion 1c without causing micro cracking thereon with increasing mechanical strength against the rotary bending applied to the wheel mounting flange 6 and improving the anti-fretting strength of the cylindrical portion 1b on which the inner ring 2 is press-fitted.

On the other hand, the inner ring 2 is formed of high carbon chrome steel such as SUJ2 and dipping hardened to their cores as having hardness of 58∼64 HRC and the rolling elements 4 are formed of high carbon chrome steel such as SUJ2 and hardened as having hardness of 62∼67 HRC.

The outer member 5 is integrally formed, on its outer circumference, with body mounting flange 5b adapted to be mounted on a knuckle 7 and also formed, on its inner circumference, with double row outer raceway surfaces 5a, 5a opposing to the inner raceway surfaces 1a, 2a of inner part 3. The double row rolling elements 4, 4 are rollably contained between the inner and outer raceway surfaces 1a, 2a and 5a, 5a via cages 8.

The outer member 5 is formed of medium-high carbon steel such as S53C including carbon of 0.40∼0.80% by weight and at least the double row outer raceway surfaces 5a, 5a are hardened by high frequency induction hardening as having a surface hardness of 58∼64 HRC. A seal 9 is mounted on the outer-side opening of an annular gap formed between the outer member 5 and inner member 3 and a cap 10 is mounted on the inner-side opening to prevent leakage of lubricating grease sealed within the bearing and entering of rain water or dusts from the outside into the bearing.

Although it is shown here the wheel bearing apparatus formed by a double row angular contact ball bearing using balls as rolling elements 4, the present invention is not limited to such a bearing and may be a double row conical roller bearing using conical rollers as rolling elements 4. In addition, although it is shown here the wheel bearing apparatus of third generation type in which the inner raceway surface 1a is directly formed on the hub wheel 1, the present invention can be applied to a second generation type bearings (not shown) in which a pair of inner rings are press-fitted onto the cylindrical portion of the hub wheel.

A vibration damping member 11 of one embodiment of the present invention is interposed between opposite surfaces of the body mounting flange 5b of the outer member 5 and of the knuckle 7. More particularly, the vibration damping member 11 is formed of vibration damping alloy, has a L-shaped cross section, and comprises a circular disc portion 11a adapted to be contacted with an inner-side side surface 12 of the body mounting flange 5b and a cylindrical portion 11b adapted to be inserted onto a cylindrical pilot portion 5c of the outer member 5 and through apertures 11c are formed in the circular disc portion 11a through which the securing bolts 13 are inserted.

Female threads 5d screwing the securing bolts 13 are formed in the body mounting flange 5b. The outer member 5 is fastened to the knuckle 7 by inserting the securing bolts 13 into the through apertures 7a formed on the knuckle 7 and through apertures 11c of the vibration damping member 11 and then by screwing the securing bolts 13 to the female threads 5d of the body mounting flange 5b.

Examples of the vibration damping alloys forming the vibration damping member 11 are Mg (magnesium) alloy, ferrite system stainless alloy (e.g. JIS SUS 430 system etc.), Mn (manganese)-Cu (copper) alloy, Al (aluminum)-Zn (zinc) alloy, Co (cobalt)-Ni (nickel) alloy, shape memory alloy such as Ni-Ti (titanium) alloy, or vibration damping resin based on general plastic or general engineer plastic such as ABS (acrylonitrile-butadiene styrene), PA (polyamide) and POM (polyacetal). It is possible to suppress transmission of road noise generated between a road and a wheel being transmitted to the knuckle 7 via bearing portion with keeping the rigidity of the wheel bearing apparatus by interposing these vibration damping members 11 between contacting surfaces of the body mounting flange 5b of the outer member 5 and the knuckle 7 and thus to provide a wheel bearing apparatus which can reduce vibration transmitted into a cabin of a vehicle. In addition, the vibration damping member 11 having the L-shaped cross section can suppress the deformation amount of the vibration damping member 11 by reducing the surface pressure applied to it and thus to increase the rigidity of the suspension of a vehicle.

The cylindrical portion 11b may be mounted on the pilot portion 5c of the outer member 5 or the knuckle 7 by fitting. This makes it possible to simplify the assembling work and reduce the manufacturing cost.

Fig. 2 shows a vibration damping member 14 which is a modification of the vibration damping member 11 of Fig. 1. Same reference numerals are used in explanations of this modification as those used in the embodiment of Fig. 1.

The vibration damping member 14 of Fig. 2 is formed of vibration damping alloy and has a ring-shaped washer configuration. Each washer-shaped vibration damping member 14 is arranged around each securing bolt 13 and performs not only to reduce vibration transmitted to a cabin of a vehicle with suppressing the road noise being transmitted to the knuckle but also to firmly secure the wheel bearing apparatus with increasing the close contact property of the vibration damping member 14 to the contact surfaces of both the body mounting flange 5b and the knuckle 7.

The flat washer-shaped vibration damping members 14 individually used to securing bolts 13 shown in Fig. 2 may be formed as a single plated vibration damping member 15 formed with a plurality of through apertures 11c for the securing bolts 13 circumferentially arranged along the periphery of the body mounting flange 5b of the outer member 5. This single plated-shaped vibration damping member 15 is able not only to reduce the number of parts but also to reduce the deformation amount of the vibration damping member 15 to increase the rigidity of a suspension of a vehicle with reducing the surface pressure applied to the vibration damping member 15 since the vibration damping member 15 can contact against the surfaces of both the body mounting flange 5b and the knuckle 7 in a larger area than that of the flat washer-shaped vibration damping member 14.

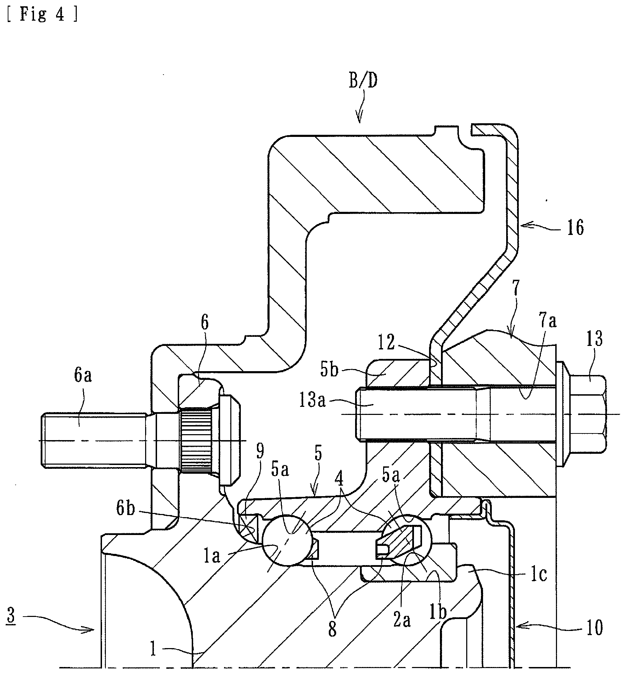

Fig. 4 shows an example in which a splash guard 16 is formed by vibration damping member. That is, the splash guard is usually used to close an opening of the brake drum B/D mounted on the wheel mounting flange 6 of the hub wheel 1 and part of the splash guard is formed by vibration damping member of vibration damping alloy. Accordingly, the splash guard i.e. vibration damping member 16 is able to reduce vibration transmitted to a cabin of a vehicle with suppressing road noise being transmitted to the knuckle 7 and thus practical because of performing same assembling steps as usual without changing an assembling line.

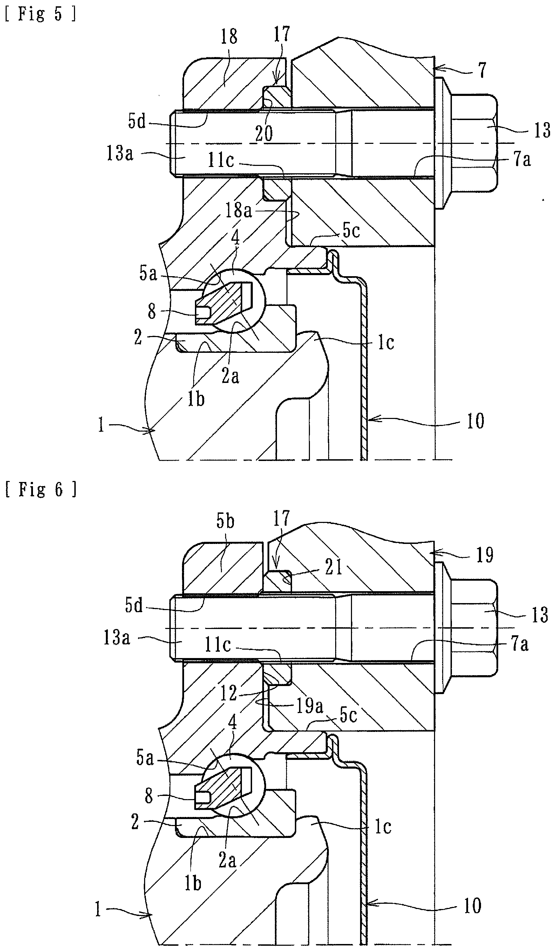

As shown in Figs. 5 and 6, a vibration damping member 17 may be mounted on a body mounting flange 18 or a knuckle 19. More particularly as shown in Fig. 5, each vibration damping member 17 has a ring-shaped configuration formed of vibration damping alloy and the through aperture 11c for the securing bolt 13 is formed, similarly to the example of Fig. 2. The vibration damping members 17 are adapted to be mounted within recesses 20 each being formed around an inner-side opening of the female thread 5d on the inner-side surface 18a of the body mounting flange 18. The thickness of the vibration damping member 17 is formed larger than the depth of the recess 20 and the body mounting flange 18 can be fastened to the knuckle 7 with the vibration damping member 17 being contacted with the side surface of the knuckle 7 by screwing the securing bolts 13 into the female threads 5d of the body mounting flange 18. Accordingly, it is possible to reduce vibration transmitted to a cabin of a vehicle with suppressing road noise being transmitted to the knuckle 7 and firmly secure the wheel bearing apparatus to the knuckle 7 with increasing the close contact property of the vibration damping member 17 to both the body mounting flange 18 and the knuckle 7.

Fig. 6 shows another example similar to that shown in Fig. 5. This example is same as that of Fig. 5 except that a recess 21 for containing the vibration damping member 17 is formed on a knuckle 19. Accordingly, same effects can be also obtained by this example.

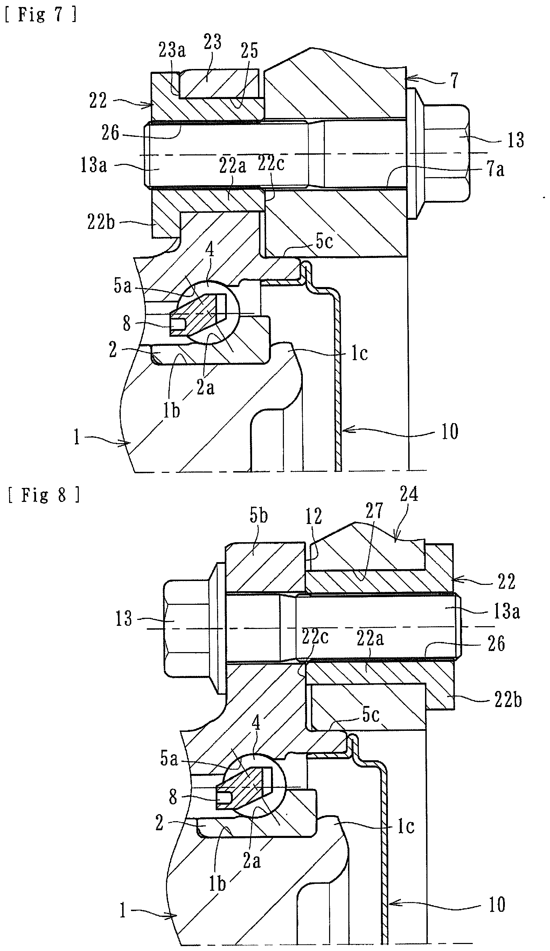

As shown in Figs. 7 and 8, a vibration damping member 22 may be mounted on a body mounting flange 23 or a knuckle 24. More particularly as shown in Fig. 7, each vibration damping member 22 is formed of vibration damping alloy and comprises a cylindrical portion 22a and a flange portion 22b extending radially outward from one end of the cylindrical portion 22a and adapted to be closely contacted with an outer-side surface 23a of the body mounting flange 23 or the knuckle 24. Each the cylindrical portion 22a of the vibration damping member 22 is formed with a female thread 26 which is screwed with a male thread 13a of the securing bolt 13 under a condition in which the end face of the cylindrical portion 22a is abutted against the body mounting flange 23. Accordingly, it is possible to suppress road noise being transmitted to the knuckle 7 via the securing bolt 13 and thus to reduce vibration transmitted to a cabin of a vehicle.

Fig. 8 shows another example similar to that shown in Fig. 7. This example is same as that of Fig. 7 except that a through aperture 27 for receiving the vibration damping member 22 is formed on a knuckle 24. Accordingly, same effects can be also obtained by this example.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industry

The wheel bearing apparatus of the present invention can be applied to wheel bearing apparatus having an outer member integrally formed with a body mounting flange and adapted to be mounted on a suspension of a vehicle.

### Description of Reference numerals

- 1: hub wheel
- 1a, 2a: inner raceway surface
- 1b: cylindrical portion
- 1c: caulked portion
- 2: inner ring
- 3: inner member
- 4: rolling elements
- 5: outer member
- 5a: outer raceway surface
- 5b, 18, 23: body mounting flange
- 5c: pilot portion
- 5d, 26: female thread
- 6: wheel mounting flange
- 6a: hub bolt
- 6b: inner-side base of wheel mounting flange
- 7, 19, 24: knuckle
- 7a, 11c, 25, 27: through aperture
- 8: cage
- 9: seal
- 10: cap
- 11, 14, 15, 17, 22: vibration damping member
- 11a: disc portion
- 11b, 22a: cylindrical portion
- 12, 18a: inner-side surface of body mounting flange
- 13: securing bolt
- 13a: male thread
- 16: splash guard
- 19a: outer-side surface of knuckle
- 20, 21: recess
- 22b: flange portion
- 22c: end face of cylindrical portion
- 23a: outer-side surface of body mounting flange
- 50: double row rolling bearing
- 51, 52: inner ring
- 53: constant speed universal joint
- 54: outer joint member
- 55: elastic member
- B/D: brake drum

## Claims

1. A wheel bearing apparatus comprising:
an outer member (2) integrally formed on its outer circumference with a body mounting flange (5b,18 or 23) to be mounted on a knuckle (7, 19 or 24) forming part of a suspension apparatus and also integrally formed on its inner circumference with double row outer raceway surfaces (5a and 5a);
an inner member (3) including a hub wheel (1) and at least one inner ring (2), the hub wheel (1) being integrally formed on its one end with a wheel mounting flange (6) and having a cylindrical portion (1b) axially extending from the wheel mounting flange (6), the inner ring (2) being press fitted onto the cylindrical portion (1b) of the hub wheel (1), the inner member (3) being formed on its outer circumference with double row inner raceway surfaces (1a and 2a) opposing to the double row outer raceway surfaces (5a and 5a);
double row rolling elements (4 and 4) contained between the double row inner raceway surfaces (1a and 2a) and the double row outer raceway surfaces (5a and
5a) respectively of the inner member (3) and the outer member (5); and
the outer member (5) being adapted to be fastened to the knuckle (9,19 or 24) through securing bolts (13) **characterized in**:
**that** a vibration damping member (11, 14, 15, 16, 17 or 22) is interposed between opposite surfaces of the body mounting flange (5b, 18 or 23) of the outer member (5) and of the knuckle (7,19 or 24).

2. A wheel bearing apparatus of claim 1 wherein the vibration damping member (11,14,15,16,17 or 22) is formed of vibration damping alloy or vibration damping resin.

3. A wheel bearing apparatus of claim 1 or 2 wherein the vibration damping member (11) comprises a circular disc portion (11a) adapted to be contacted with an inner-side side surface (12) of the body mounting flange (5b) and a cylindrical portion (11b) axially extending from a radially inner end of the circular disc portion (11a) and adapted to be inserted onto a cylindrical pilot portion (5c) of the outer member (5), and through apertures (11c) are formed in the circular disc portion (11a) through which the securing bolts (13) are passed.

4. A wheel bearing apparatus of claim 3 wherein the cylindrical portion (11b) of the vibration damping member (11) is press-fitted onto the pilot portion (5c) or into the knuckle (7).

5. A wheel bearing apparatus of claim 1 or 2 wherein a brake drum or brake disc (B/D) is secured on the wheel mounting flange (6) and a splash guard (16) for closing an opening of the brake drum or brake disc (B/D) is formed by the vibration damping member.

6. A wheel bearing apparatus of claim 1 or 2 wherein female threads (5d) for screwing the securing bolts (13) are formed in the body mounting flange (5b or 18) of the outer member (5), the through apertures (7a) for the securing bolts (13) are formed in the knuckle (7 or 19), recesses (20 or 21) for receiving the vibration damping members (17) are formed around inner-side openings of the female threads (5d) or around outer-side openings of the through apertures (7a) of the knuckle (19), and the axial thickness of the vibration damping members (17) is larger than the depth of the recesses (20 or 21).

7. A wheel bearing apparatus of claim 1 or 2 wherein through apertures (25 or 27) are formed in the body mounting flange (23) or the knuckle (24), vibration damping members (22) are inserted into the through apertures (25 or 27), each the vibration damping member (22) comprises a cylindrical portion (22a) and a flange portion (22b) extending radially outward from one end of the cylindrical portion (22a) and adapted to be closely contacted with a side surface of the body mounting flange (23) or the knuckle (24), each the cylindrical portion (22a) of the vibration damping member (22) is formed with a female thread (26) which is screwed with a male thread of the securing bolt (13) under a condition in which the end face of the cylindrical portion (22a) is abutted against the body mounting flange (23) or the knuckle (24).
